# FASCICULE DE BREVET EUROPEEN

(11) **EP 0 384 826 B1**
(45) Date de publication et mention de la délivrance du brevet: **18.11.1993**
(21) Numéro de dépôt: 90400457.9
(22) Date de dépôt: 20.02.1990
(51) Int. Cl.: B65D 90/66, B65G 69/18

(54) **Installaton de transfert entre récipients de produits s'écoulant par gravité**
Übergabeanlage zwischen Behältern für durch Schwerkraft fliessende Produkte
Transfer installation between containers of products flowing by gravity

(30) Priorité: 21.02.1989 FR 8902226
(43) Date de publication de la demande: 29.08.1990
(73) Titulaire: GALLAY S.A., F-93523 Saint-Denis Cedex 01 (FR); ELVECO Msj S.A., B-1200 Woluwe Saint Lambert (BE)
(72) Inventeur: Jaeger, Marc, 78750 Mareil Marly (FR); Lhoest, Willy, B-1200 Bruxelles (BE)
(74) Mandataire: Bloch, Gérard

(56) Documents cités:
- EP-A- 0 092 008
- DE-C- 458 573
- FR-A- 2 077 451

## Description

La présente invention concerne les installations de transfert de produits s'écoulant par gravité, tels que poudres, granulés ou liquides, de récipients, ou conteneurs, d'orifices de base obturable, dans des récipients situés à un niveau inférieur aux précédents, par l'intermédiaire d'un conduit, ou goulotte, vertical ou oblique fixe en position mais démontable, raccordable auxdits récipients inférieurs.

Dans les installations connues, les récipients, ou conteneurs, à vidanger, pour effectuer le transfert de leurs produits, sont amenés, par tous moyens connus, au-dessus de la goulotte de manière que leur orifice de vidange, obturé par une vanne de type connu, soit à l'aplomb de l'orifice supérieur de la goulotte débouchant à l'air libre, et que la simple manoeuvre de la vanne du conteneur provoque l'écoulement des produits à transférer dans cette goulotte.

Il est clair que, dans ces installations, une proportion non négligeable de particules détachées des produits à transférer, s'échappe dans l'atmosphère ambiante au cours du déplacement du conteneur, dès l'écoulement des produits et même après l'écoulement par l'orifice de la goulotte.

Les conséquences de cette pollution peuvent, dans certains cas, être graves, notamment lorsque ces installations visent l'alimentation de machines à conditionner des produits toxiques en particulier des produits pharmaceutiques.

On a cherché à éviter, ou du moins à réduire au maximum ce risque de pollution.

C'est ainsi notamment que dans le document DE 458573, sur lequel est basé le préambule de la revendication 1, on a prévu que l'orifice de base du conteneur et l'orifice supérieur de la goulotte sont ouverts ou fermés simultanément. Il y est, en outre, prévu des moyens formant enveloppe étanche entre la base du conteneur et la goulotte, mais ces moyens sont liés au conteneur. Dans une telle installation, les risques de pollution ne peuvent donc être évités, lors des déplacements du conteneur par rapport à la goulotte.

Pour les éviter, l'invention a pour objet une installation de transfet de produits s'écoulant par gravité, tels que poudres, granulés ou liquides, de récipients, ou conteneurs, d'orifice de base obturable, dans des récipients ou machines situés à un niveau inférieur aux précédents, par l'intermédiaire d'un conduit, ou goulotte, vertical, fixe en position, raccordable aux dits récipients ou machines inférieurs, dans laquelle une première plaque est prévue déplaçable entre une première position de recouvrement de l'orifice supérieur de la goulotte et une seconde position de dégagement de cet orifice et une seconde plaque est prévue déplaçable entre une première position de recouvrement de l'orifice de base du conteneur et une seconde position de dégagement dudit orifice des moyens étant prévus pour que les deux plaques occupent simultanément soit leur première, soit leur seconde position caractérisé par le fait que les dites plaques sont montées coulissantes horizontalement et le conteneur se déplaçant d'une première position de vidange au-dessus de l'orifice de la goulotte à une seconde position de dégagement complet de la dite goulotte, des moyens sont prévus pour que, au cours du déplacement horizontal du conteneur de sa première à sa seconde position, les deux plaques viennent occuper leur première position et, au cours du déplacement inverse du conteneur, elles viennent occuper leur seconde position de manière que l'orifice inférieur du conteneur et l'orifice supérieur de la goulotte ne sont jamais laissés à l'air libre.

Grâce à cet agencement, on voit qu'aussi bien pendant tout le déplacement du conteneur jusqu'à sa position de vidange au-dessus de la goulotte que pendant l'opération de transfert et son retour vers l'évacuation après transfert, l'orifice inférieur du conteneur et l'orifice supérieur de la goulotte ne sont jamais laissés à l'air libre. Ils sont toujours recouverts soit totalement par leur plaque respective servant de couvercle soit par partie de cette plaque et partie de la bride de l'orifice opposé.

La dissémination dans l'atmosphère des produits transférés se trouve ainsi pratiquement supprimée, un joint, par exemple un joint gonglable, étant en pratique toujours prévu sur la bride de l'orifice de goulotte pour assurer l'étanchéité parfaite lorsque les deux orifices sont superposés.

Sous sa forme de réalisation la plus avantageuse, simplifiant les moyens assurant les mouvements des deux plaques coulissantes, l'invention prévoit de faire commander ces mouvements directement par le mouvement du conteneur.

Selon un cas particulier préféré de cette forme de réalisation, il est prévu que, par rapport à la trajectoire d'amenée du conteneur, d'une part, les moyens de guidage de la première plaque sont disposés de façon que celle-ci étant en position de recouvrement, le conteneur vienne, par une de ses parties extérieures, en butée contre une partie d'extrémité de ladite plaque et la repousse jusqu'à sa position extrême de dégagement lorsqu'il atteint sa position de vidange, un premier aimant permanent assurant le maintien en contact des deux parties, pendant le déplacement en sens inverse, jusqu'au retour de ladite plaque en position de recouvrement, et d'autre part, les moyens de guidage de la seconde plaque sont disposés de façon qu'une partie d'extrémité de celle-ci vienne en butée contre une partie extérieure de la goulotte dès que le conteneur et la première plaque arrivent en contact et un second aimant permanent assurant le maintien en contact des deux parties jusqu'à ce que cesse le contact entre le conteneur et la première plaque.

Selon un perfectionnement important de l'invention, il est prévu dans la zone entourant la partie supérieure de la goulotte des moyens de création d'un flux d'air laminaire soumis à l'action de moyens de filtrage puissants.

Ce flux laminaire assure ainsi l'élimination des particules qui avaient échappé à l'évacuation par la goulotte.

L'invention vise encore à améliorer l'efficacité du joint prévu autour de l'orifice supérieur de la goulotte, et elle prévoit, à cet effet, d'utiliser, non plus, un joint gonflable simple mais un joint multiple, en principe double, c'est-à-dire deux joints circulaires concentriques, gonflables indépendamment l'un de l'autre et entre lesquels débouchent des orifices d'admission d'air, ou autre fluide, comprimé filtré, et des orifices d'évacuation sous vide.

Cette structure de joint permet un nettoyage parfait de l'espace intérieur entre les orifices de la goulotte et du conteneur.

Un exemple de réalisation préféré d'une installation selon l'invention est décrit ci-après, à titre nullement limitatif, en se référant aux dessins annexés, sur lesquels :
la figure 1 est une vue partielle de l'installation en élévation latérale, le conteneur étant en position de vidange,
la figure 2 est une vue en élévation de bout de l'installation de la figure 1,
la figure 3 est une vue en plan de l'installation, en l'absence du conteneur,
les figures 4a, b, c, d et e sont des schémas illustrant le principe du déplacement synchronisé des plaques de recouvrement,
la figure 5 est une vue en élévation de bout de l'installation des figures 1 à 3, dotée de moyens de création d'un flux d'air laminaire,
la figure 6 est une vue en plan correspondant à la figure 5, mais en l'absence du conteneur,
la figure 7 est une vue en élévation schématique illustrant le circuit du flux d'air laminaire,
les figures 8 à 10 illustrent une forme particulière avantageuse du joint de goulotte,
la figure 9 étant une vue en coupe selon la ligne IX-IX et
la figure 10 est une vue en coupe selon la ligne X-X.

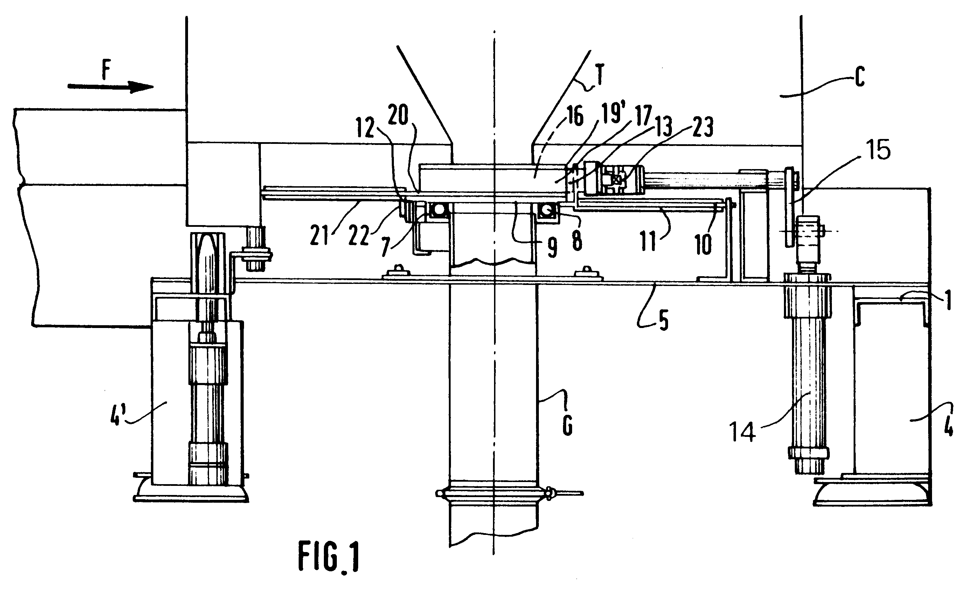

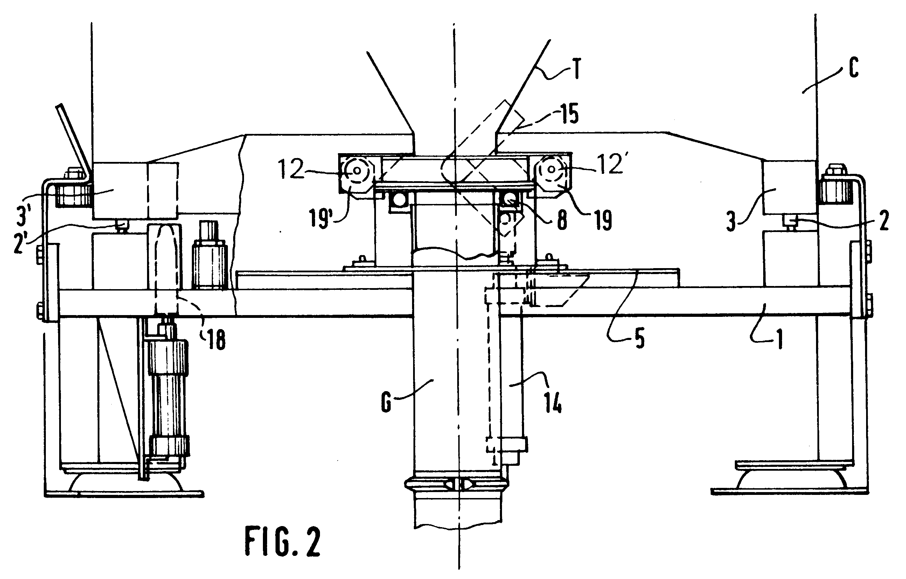

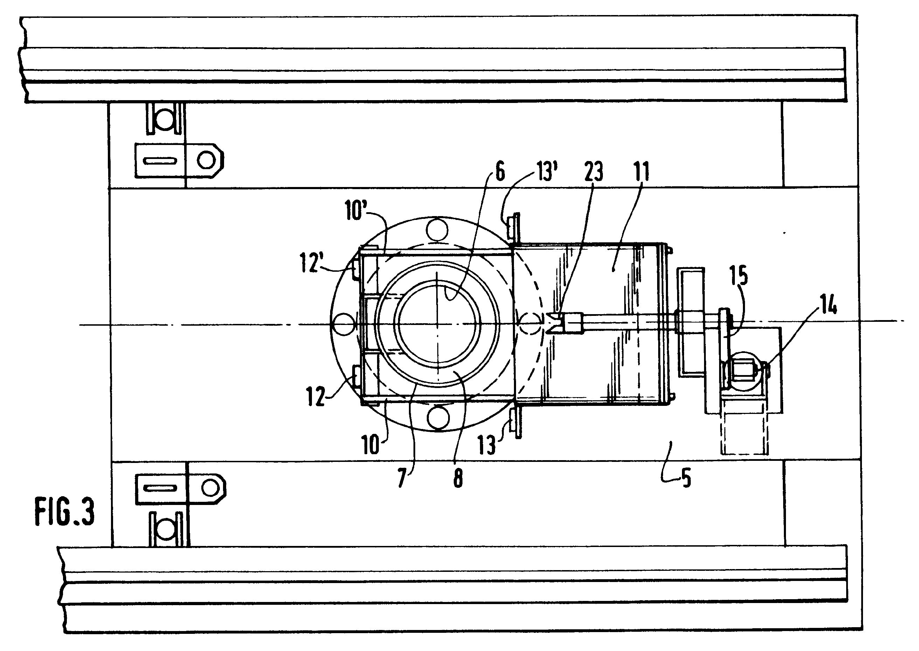

Dans l'exemple représenté aux figures 1 à 3, l'installation comporte, sur les poutres horizontales 1 d'un bâti vertical, deux chaînes motorisées 2, 2' parallèles sur lesquelles sont posés les pieds 3, 3' du conteneur C à vidanger.

Les montants verticaux 4, 4' du bâti supportent un plateau 5 de largeur inférieure à l'écartement entre les chaînes 2, 2' et muni d'une ouverture 6 de passage de la goulotte de transfert G, d'axe équidistant des deux chaînes 2, 2' et dont l'orifice supérieur fait saillie au-dessus du plateau 5.

Ce plateau 5 sert de support, d'une part, à une bride 7 de logement d'un joint gonflable 8 monté à la partie supérieure 9 de la goulotte G, d'autre part, à deux tiges parallèles horizontales 10, 10' équidistantes d'un plan radial de la goulotte, et sur lesquelles est montée coulissante une plaque métallique sensiblement carrée 11. Deux aimants permanents 12, 12' sont fixés à l'extrémité des tiges 10, 10' et deux aimants permanents 13, 13' sont fixés latéralement sur l'extrémité de la plaque 11.

Le plateau 5 sert également de support au vérin 14 et à la manivelle 15 de commande de la vanne 16 de la trémie T du conteneur C, logée dans un boîtier 17.

Pour l'opération de vidange, le conteneur C posé sur les chaînes 2, 2', à l'entrée de la voie d'entraînement, les pieds 3, 3' en avant, est entraîné par ces chaînes dans le sens de la flèche F (fig.1) que nous désignerons comme allant vers l'avant, jusqu'à ce que le boîtier 17 de sa vanne 16 soit au-dessus de l'orifice de la goulotte, donc du joint gonflable 8, en position de vidange. Il y est bloqué par une butée mécanique 18. A l'avant du boîtier 17, deux plaques métalliques 19, 19' sont alors au contact des deux aimants 13, 13' du faux couvercle 11.

Sous le boîtier 17, sont fixés au conteneur deux tiges 20, parallèles, horizontales, servant de guides à une plaque ou faux couvercle 21 de forme similaire à celle de la plaque 11, et à celle de la face inférieure du boîtier 17. Cette plaque coulissante 21 est montée coulissante sur les tiges 20. Elle présente à son extrémité avant un rebord tombant 22 qui, dans la position de vidange (fig.1), est au contact des aimants 12, 12'.

L'extrémité 23 de la manivelle de commande 15 est alors en prise avec l'extrémité de l'arbre de la vanne 16.

Le fonctionnement de l'installation qui vient d'être décrit s'explique facilement en se référant aux figures schématiques 4a, b, c, d, e et f.

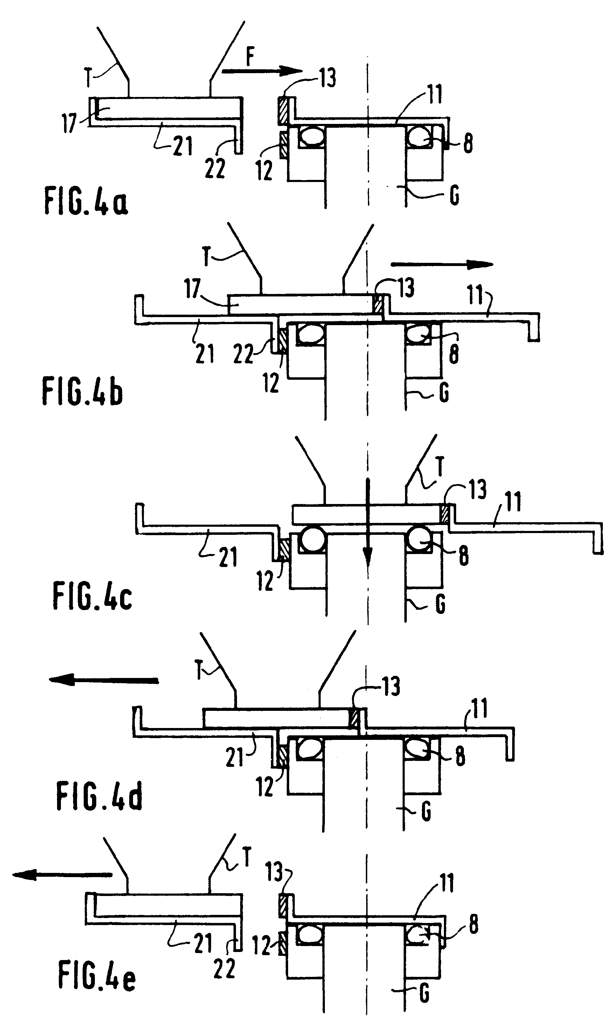

La figure 4a représente la situation initiale dans laquelle la plaque 11, avec son aimant 13, recouvre la goulotte G, et la trémie T est en mouvement vers la goulotte entraînant sous lui la plaque 21 recouvrant son orifice inférieur.

Sur la figure 4b le conteneur poursuit son mouvement, mais la plaque 21 reste par son rebord 22 en butée contre l'aimant 12. Simultanément la plaque 11 est repoussée par le boîtier 17.

Sur la figure 4c, le conteneur est parvenu en position de vidange, sa trémie T étant au-dessus de la goulotte et en contact avec l'aimant 13 de la plaque 11, complètement repoussée par le boîtier 17.

Sur la figure 4d, après vidange, le conteneur recule en entraînant la plaque 11, mais la plaque 21 restant retenue par l'aimant 12.

Sur la figure 4e, le conteneur recule toujours mais en entraînant sous sa trémie T la plaque 21 qu'il a arraché à l'aimant 12, la plaque 11 étant, entre-temps, amenée en butée l'aimant 13 a été détaché du conteneur.

La figure 4c correspondant à la situation illustrée sur la figure 1, le joint 8 étant gonflé, c'est-à-dire à la position de vidange du conteneur, après ouverture de la vanne 16 par le vérin 14.

La trémie T étant vidée, le joint 8 est dégonflé, la vanne 16 est refermée et les chaînes 2, 2' sont mises en marche pour entraîner le conteneur vers l'arrière, direction inverse de la flèche F, c'est-à-dire vers l'entrée du chemin d'amenée pour la vidange.

La figure 4d correspond à une position intermédiaire du conteneur en cours de ce déplacement vers l'arrière. Grâce aux aimants 13, 13' et aux plaques métalliques 19 du boîtier 17, le faux couvercle 11 est tiré vers l'arrière en coulissant sur les tiges 10, 10'. Le couvercle 21 est retenu en place par contact de son rebord 22 et des aimants 12, 12', et ce sont les tiges de guidage 20 qui coulissent sur lui.

La figure 4e correspondant à la position du conteneur dans laquelle le couvercle 11 est venu en butée à l'extrémité arrière de ses tiges de guidage 10, 10'.

La trémie T est alors au-dessus du couvercle 21. La poursuite du déplacement du conteneur vers l'arrière a provoqué la séparation, d'une part, des plaques 19 et des aimants 13, 13', d'autre part, celle du rebord 22 et des aimants 12, 12'. Le conteneur entraîne avec lui son couvercle 21.

On voit qu'au cours de tout le déplacement du conteneur après vidange l'orifice supérieur de la goulotte et l'orifice inférieur du conteneur ne sont jamais laissés libres à l'air ; ils sont toujours au contact de leurs couvercles et des brides respectives entourant ces orifices.

Les risques de pollution de l'atmosphère sont réduits dans une très large mesure.

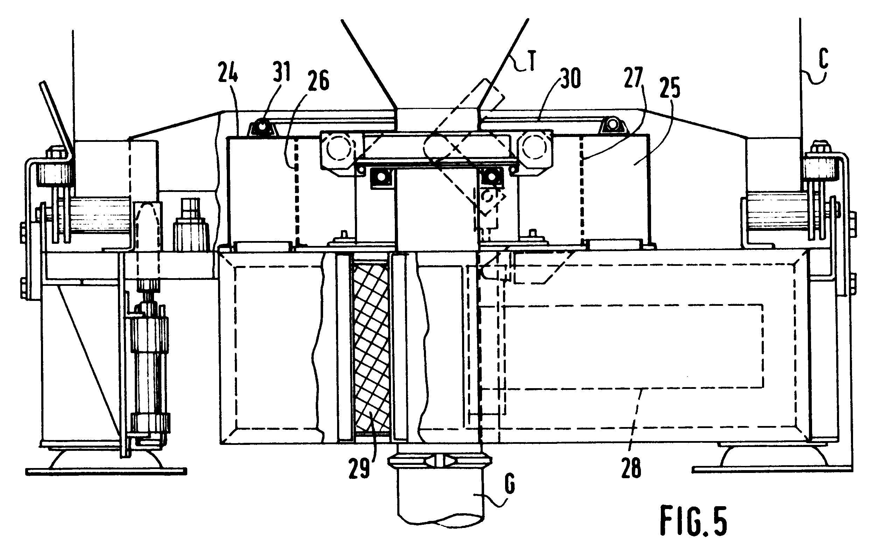

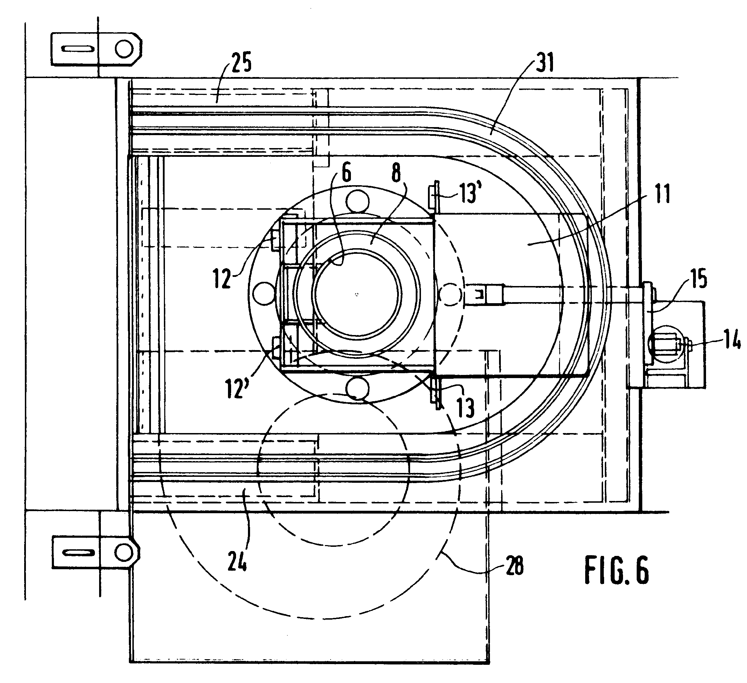

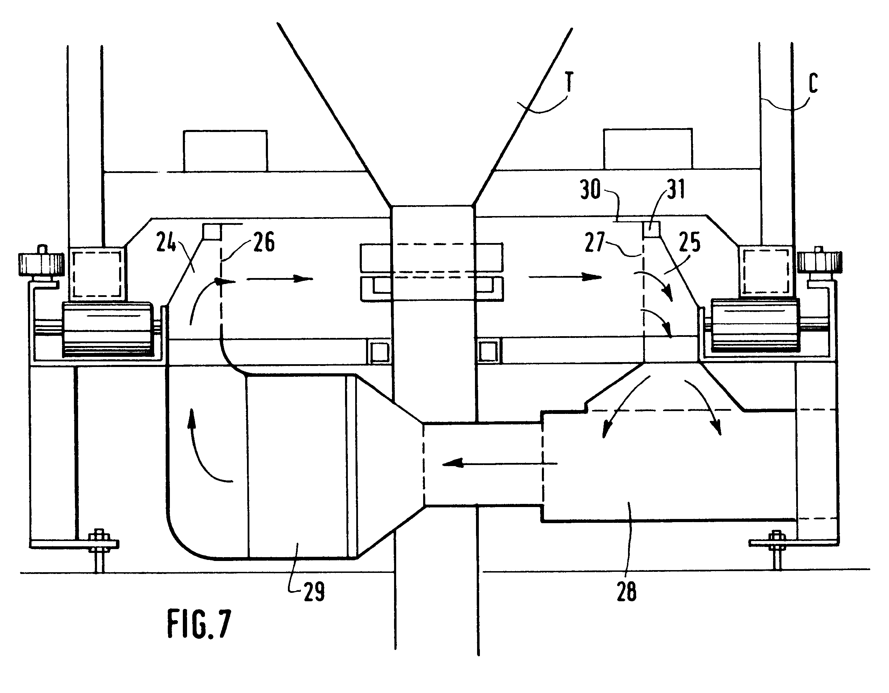

Dans l'exemple représenté aux figures 5 à 7, il est prévu de réduire encore ces risques par passage d'un flux d'air laminaire autour de la partie supérieure de la goulotte. A cet effet, sont montées, face à face de chaque côté de la goulotte, deux chambres 24, 25 étanches, mais dont les parois parallèles qui se font face 26, 27 sont perforées. La chambre 24 est reliée au refoulement d'un ventilateur 28 par une conduite sur laquelle est monté un filtre puissant 29.

L'air circule de la chambre 24 à la chambre 25 dans le sens des flèches pour revenir au ventilateur 28.

A la partie supérieure du groupe des chambres 24, 25 est prévu une plaque de couverture 30 et un joint 31.

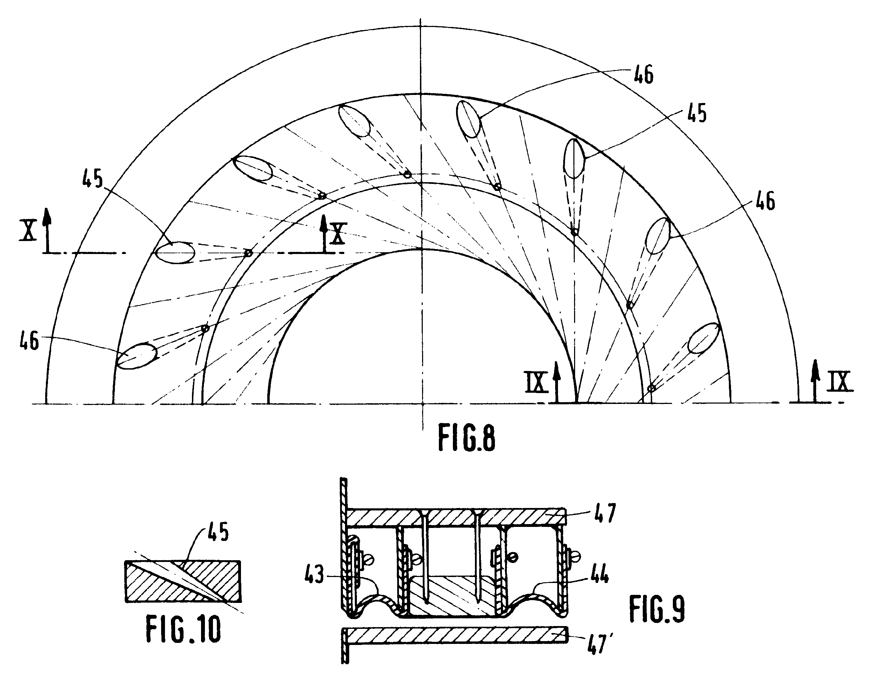

Dans l'exemple représenté aux figures 8 à 10 est décrit un joint perfectionné selon l'invention particulièrement adapté au nettoyage parfait entre goulotte et conteneur.

Il comprend deux joints gonflables coaxiaux 43, 44 entre lesquels des conduits d'air, ou autre gaz, comprimé 45, et des conduits 46 reliés à une source de vide débouchent dans l'espace compris entre les brides 47, 47'.

A la fermeture, le joint extérieur 44 est gonflé, on envoie de l'air comprimé par les conduits 45 et on soumet au vide par les conduits 46 puis on gonfle le joint intérieur 43 assurant ainsi un joint parfaitement propre.

A l'ouverture, les deux joints sont gonflés, on laisse se dégonfler le joint intérieur 43, on envoie de l'air comprimé pour nettoyer l'espace intérieur, puis on laisse se dégonfler le joint extérieur 44.

## Revendications

1. Installation de transfert de produits s'écoulant par gravité, tels que poudres, granulés ou liquides, de récipients, ou conteneurs, d'orifice de base obturable, dans des récipients ou machines situés à un niveau inférieur aux précédents, par l'intermédiaire d'un conduit, ou goulotte, vertical, fixe en position raccordable aux dits récipients ou machines inférieurs, dans laquelle une première plaque (11) est prévue déplaçable entre une première position de recouvrement de l'orifice supérieur de la goulotte (G) et une seconde position de dégagement de cet orifice et une seconde plaque (21) est prévue déplaçable entre une première position de recouvrement de l'orifice de base du conteneur (T) et une seconde position de dégagement dudit orifice, des moyens étant prévus pour que les deux plaques occupent simultanément soit leur première, soit leur seconde position caractérisé par le fait que les dites plaques (11,21) sont montées coulissantes horizontalement et le conteneur se déplaçant d'une première position de vidange au-dessus de l'orifice de la goulotte (G) à une seconde position de dégagement complet de la dite goulotte, des moyens sont prévus pour que, au cours du déplacement horizontal du conteneur (T) de sa première à sa seconde position, les deux plaques (11,21) viennent occuper leur première position et, au cours du déplacement inverse du conteneur, elles viennent occuper leur seconde position, de manière que l'orifice inférieur du conteneur et l'orifice supérieur de la goulotte ne sont jamais laissés à l'air libre.

2. Installation selon la revendication 1, dans laquelle des moyens sont prévus pour que les mouvements synchrones des plaques coulissantes soient commandés directement par le mouvement du conteneur.

3. Installation selon la revendication 2, dans laquelle il est prévu que, par rapport à la trajectoire d'amenée du conteneur, d'une part, les moyens de guidage de la première plaque sont diposés de façon, que celle-ci étant en position de recouvrement, le conteneur vienne, par une de ses parties extérieures, en butée contre une partie d'extrémité de ladite plaque et la repousse jusqu'à sa position extrème de dégagement lorsqu'il atteint sa position de vidange, un premier aimant permanent assurant le maintien en contact des deux parties pendant le déplacement en sens inverse, jusqu'au retour de ladite plaque en position de recouvrement et,d'autre part, les moyens de guidage de la seconde plaque sont disposés de façon qu'une partie d'extrémité de celle-ci vienne en butée contre une partie extérieure de la goulotte dès que le conteneur et la première plaque arrivent en contact, un second aimant permanent assurant le maintien en contact des deux parties jusqu'à ce que cesse le contact entre le conteneur et la première plaque.

4. Installation selon l'une des revendications 1 à 3, dans laquelle il est prévu, dans la zone entourant la partie supérieure de la goulotte, des moyens de création d'un flux d'air laminaire soumis à l'action de moyens de filtrage puissants.

5. Installation selon l'une des revendications précédentes, dans laquelle il est prévu, autour de l'orifice supérieur de la goulotte, un joint double, constitué par deux joints circulaires concentriques, gonflables indépendamment l'un de l'autre et entre lesquels débouchent des orifices d'admission d'air, ou autre fluide, comprimé filtré et/ou des orifices d'évacuation sous vide.

## Patentansprüche

1. Anlage zur Überleitung von durch Schwerkraft fließenden Produkten wie Pulvern, Granulaten oder Flüssigkeiten von Gefäßen oder Behältern mit einer verschließbaren Bodenöffnung in Gefäße oder Maschinen, die in einer Ebene unterhalb der letzteren angeordnet sind, mittels einer vertikalen, ortsfesten, an die unteren Gefäße oder Maschinen anschließbaren Leitung oder Schurre, bei der eine erste Platte (11) zwischen einer ersten Position der Abdeckung der oberen Öffnung der Schurre (G) und einer zweiten Position der Freigabe dieser Öffnung verschiebbar und eine zweite Platte (21) zwischen einer ersten Position der Abdeckung der Bodenöffnung des Behälters (T) und einer zweiten Position der Freigabe dieser Öffnung verschiebbar vorgesehen ist, wobei Mittel vorgesehen sind, damit die zwei Platten gleichzeitig entweder ihre erste oder ihre zweite Position einnehmen, dadurch gekennzeichnet, daß die genannten Platten (11, 21) horizontal gleitend montiert sind und Mittel vorgesehen sind, damit, wenn der Behälter sich von einer ersten Position der Entleerung über der Öffnung der Schurre (G) in eine zweite Position der völligen Lösung von dieser Schurre bewegt, im Verlauf der horizontalen Verschiebung des Behälters (T) von seiner ersten in seine zweite Position die zwei Platten (11, 21) ihre erste Position einnehmen und im Verlauf der entgegengesetzten Verschiebung des Behälters sie ihre zweite Position einnehmen, und zwar derart, daß die untere Öffnung des Behälters und die obere Öffnung der Schurre niemals mit dem Freien in Verbindung stehen.

2. Anlage nach Anspruch 1, bei der Mittel vorgesehen sind, um die Synchronbewegungen der gleitenden Platten direkt durch die Bewegung des Behälters zu steuern.

3. Anlage nach Anspruch 2, bei der vorgesehen ist, daß im Verhältnis zur Zufuhrbahn des Behälters einerseits die Führungsmittel der ersten Platte derart angeordnet sind, daß, wenn diese sich in der in Abdeckposition befindet, der Behälter mit einem seiner äußeren Teile mit einem Außenteil der Platte in Anschlag kommt und sie bis in ihre äußerste Position der Freigabe zurückschiebt, wenn er seine Entleerungsposition erreicht, wobei ein erster Permanentmagnet die Aufrechterhaltung des Kontakts zwischen den zwei Teilen während der Verschiebung in die entgegengesetzte Richtung bis zur Rückkehr der Platte in die Abdeckposition gewährleistet, und andererseits die Führungsmittel der zweiten Platte derart angeordnet sind, daß ein Außenteil von dieser mit einem Außenteil der Schurre in Anschlag kommt, sobald der Behälter und die erste Platte in Kontakt kommen, wobei ein zweiter Permanentmagnet die Aufrechterhaltung des Kontakts zwischen den zwei Teilen gewährleistet, bis der Kontakt zwischen dem Behälter und der ersten Platte abbricht.

4. Anlage nach einem der Ansprüche 1 bis 3, bei der in der den oberen Teil der Schurre umgebenden Zone Mittel zur Schaffung eines laminaren Luftstromes vorgesehen sind, welcher der Wirkung von leistungsstarken Filtermitteln ausgesetzt ist.

5. Anlage nach einem der vorhergehenden Ansprüche, bei der um die obere Öffnung der Schurre eine doppelte Dichtung vorgesehen ist, die aus zwei konzentrischen kreisförmigen Dichtungen besteht, welche unabhängig voneinander aufblasbar sind und zwischen denen Öffnungen zur Zuleitung von komprimierter gefilterter Luft oder eines anderen Fluids und/oder Evakuierungsöffnungen zur Erzeugung eines Vakuums münden.

## Claims

1. Installation for transferring products which flow by gravity, such as powders, granules or liquids, from receptacles or containers with a bottom opening which can be closed, into receptacles or machines situated at a lower level than the former, by means of a vertical conduit or channel fixed in a position which can be connected to the said lower receptacles or machines, in which a first plate (11) is provided in such a manner that it can be moved between a first position in which it covers the upper aperture of the channel (G) and a second position in which this aperture is opened and a second plate (21) is provided in such a manner that it can be moved between a first position in which it covers the bottom aperture or the container (T) and a second position for opening the said aperture, means being provided in order that the two plates simultaneously occupy either their first, or their second position characterised by the fact that the said plates (11, 12) are assembled in a horizontally sliding manner and the container moving from a first emptying position above the aperture of the channel (G) to a second position for complete release of the said channel, means are provided in order that, during the horizontal movement of the container (T) from its first to its second position, the two plates (11, 21) occupy their first position, and, during the inverse movement of the container, they occupy their second position, in such a manner that the lower aperture of the container and the upper aperture of the channel are never left in the open air.

2. Installation according to claim 1, in which means are provided in order that the synchronous movements of the sliding plates are controlled directly by the movement of the container.

3. Installation according to claim 2, in which provision is made that, in relation to the inlet trajectory of the container, on the one hand, the means for guiding the first plate are arranged in such a way that when this plate is in the covering position the container comes to a stop, by one of its exterior parts, against an end part of the said plate and pushes it back up to its furthest release position when it reaches its emptying position, a first permanent magnet guaranteeing that the two parts are kept in contact during the movement in the opposite direction, until the said plate has returned to the covering position and, on the other hand, the means for guiding the second plate are arranged in such a way that one end part of the latter comes to rest against an external part of the channel once the container and the first plate come into contact, a second permanent magnet ensuring that the two parts are kept in contact until the contact ceases between the container and the first plate.

4. Installation according to one of the claims 1 to 3, in which means are provided, in the area surrounding the upper part of the channel, for creating a laminar air flow which is subject to the action of powerful means of filtering.

5. Installation according to one of the preceding claims, in which there is provided around the upper aperture of the channel, a double seal, formed by two concentric circular seals, which can be inflated independently of one another and between which apertures emerge for inlet of air or another compressed filtered fluid and/or apertures for evacuation under vacuum.
